# EUROPÄISCHE PATENTANMELDUNG

(11) **EP 0 584 584 A2**
(43) Veröffentlichungstag der Anmeldung: **02.03.1994**
(21) Anmeldenummer: 93112317.8
(22) Anmeldetag: 31.07.1993
(51) Int. Cl.: G01M 3/20, G01M 3/22

(54) **Verfahren und Vorrichtung zum Nachweis eines leichten Testgases in einer Flüssigkeit**

(30) Priorität: 24.08.1992 DE 4228085
(71) Anmelder: LEYBOLD AKTIENGESELLSCHAFT, D-63450 Hanau (DE)
(72) Erfinder: Deglow, Peter, D-33659 Bielefeld (DE)
(74) Vertreter: Leineweber, Jürgen, Dipl.-Phys.

(57) **Zusammenfassung**

Die Erfindung betrifft ein Verfahren und eine Vorrichtung zum Nachweis eines leichten Testgases, vorzugsweise Helium, in einer Prozeßflüssigkeit mit Hilfe eines testgasempfindlichen Detektors (24); um einen möglichst ungehinderten Zutritt des Testgases zum Detektor zu ermöglichen, wird vorgeschlagen, daß mit der zu untersuchenden Prozeßflüssigkeit eine Vakuumpumpe (18) betrieben wird und daß der Testgasnachweis dadurch erfolgt, daß das im Bereich des Einlasses (19) der Vakuumpumpe (18) aus der Prozeßflüssigkeit austetende, entgegen der Förderrichtung der Vakuumpumpe (18) diffundierende Testgas dem Detektor (24) zugeführt wird.

## Beschreibung

Die Erfindung bezieht sich auf ein Verfahren zum Nachweis eines leichten Testgases, vorzugsweise Helium, in einer Prozeßflüssigkeit mit Hilfe eines testgasempfindlichen Detektors. Außerdem bezieht sich die Erfindung auf eine für die Durchführung dieses Verfahrens geeignete Vorrichtung.

Aus der Europäischen Patentanmeldung EU-A-285 864 ist ein Verfahren zur Leckprüfung an mit Dämpfen und/oder Flüssigkeiten gefüllten Systemen bekannt. Bei einer der beschriebenen Alternativen wird ein Leck dadurch festgestellt, daß in eine Prozeßflüssigkeit infolge eines Lecks eingedrungenes Testgas mit Hilfe eines Membrangasseparators und eines testgasempfindlichen Detektors nachgewiesen wird. Die zu untersuchende Flüssigkeit wird an der Membran des Membrangasseparators vorbeigeführt. Die Membran ist für das gewählte Testgas durchlässig, für die Prozeßflüssigkeit jedoch nicht. Membranen mit diesen Eigenschaften sind kostspielig und empfindlich. Außerdem verändern sie ihre Durchtrittseigenschaften mit dem Grad ihrer Verschmutzung.

Der vorliegenden Erfindung liegt die Aufgabe zugrunde, den Nachweis des Vorhandenseins eines leichten Testgases in einer Flüssigkeit nachweisen zu können, ohne eine Membran einsetzen zu müssen.

Erfindungsgemäß wird diese Aufgabe dadurch gelöst, daß mit der zu untersuchenden Prozeßflüssigkeit eine Vakuumpumpe betrieben wird und daß der Testgasnachweis dadurch erfolgt, daß das im Bereich des Einlasses der Vakuumpumpe aus der Prozeßflüssigkeit durch Diffusion austretende, entgegen der Förderrichtung der Vakuumpumpe diffundierende, in den Detektor gelangende Testgas nachgewiesen wird. Bei den im Zusammenhang mit der Erfindung einsetzbaren, unmittelbar oder mittelbar mit einer Flüssigkeit betriebenen Vakuumpumpen besteht ein unmittelbarer Kontakt zwischen dem Betriebsfluid und dem von der Vakuumpumpe geförderten Gas. Leichte, in der Prozeßflüssigkeit enthaltene Gase sind deshalb in der Lage, ohne durch eine Membran behindert zu sein, aus der Prozeßflüssigkeit auszutreten und entgegen der Förderrichtung der Vakuumpumpe zu einem testgasempfindlichen Detektor zu gelangen.

Als Vakuumpumpe dient zweckmäßig eine Flüssigkeitsringvakuumpumpe oder eine Flüssigkeitsstrahlvakuumpumpe. Auch eine Dampfstrahlvakuumpumpe ist einsetzbar, wenn die zu untersuchende Flüssigkeit zunächst verdampft und mit dem entstandenen Dampf die Dampfstrahlvakuumpumpe betrieben wird. Diese Weiterbildung erhöht die Empfindlichkeit der Lecksuche, da sichergestellt ist, daß auch gegebenenfalls vorhandenes, in der Prozeßflüssigkeit gelöstes Helium frei wird und zum Detektor gelangen kann.

Vorteilhaft ist weiterhin, wenn der Testgasdetektor ein auf dem Gegenstromprinzip beruhender Detektor ist, der ein auf die Masse des Testgases eingestelltes Massenspektrometer und eine im Gegenstrom vom Testgas durchströmte Hochvakuumpumpe aufweist. Das für die Hochvakuumpumpe erforderliche Vorvakuum kann von einer separaten Vorpumpe, zweckmäßig jedoch von der mit der Prozeßflüssigkeit betriebenen Vakuumpumpe selbst, erzeugt werden.

Als Hochvakuumpumpe können Diffusionspumpen und Turbomolekularpumpen eingesetzt werden. Besonders zweckmäßig sind Compoundpumpen mit einer Turbomolekular- und einer Molekularpumpstufe. Pumpen dieser Art haben eine besonders hohe Vorvakuumbeständigkeit, beispielsweise ca. 20 bis 40 mbar. Mit Hilfe der oben erwähnten,
mit einem Fluid betreibbaren Vakuumpumpen können diese Drücke erzeugt werden.

Als Testgas eignet sich insbesondere Helium. Weitere leichte Testgase, wie sie in der DE-A-2737 814 offenbart sind, können ebenfalls eingesetzt werden.

Weitere Vorteile und Einzelheiten der Erfindung sollen anhand von in den Figuren 1 bis 4 dargestellten Ausführungsbeispielen erläutert werden. Es zeigen
- Figur 1 einen Wärmetauscher, der mit einem Beispiel für eine erfingsgemäße Vorrichtung auf Lecks überwacht wird, und
- Figuren 2 bis 4 Ausführungsbeispiele für Vorrichtungen nach der Erfindung mit einem Testgasdetektor, der mit einem Massenspektrometer ausgerüstet ist.

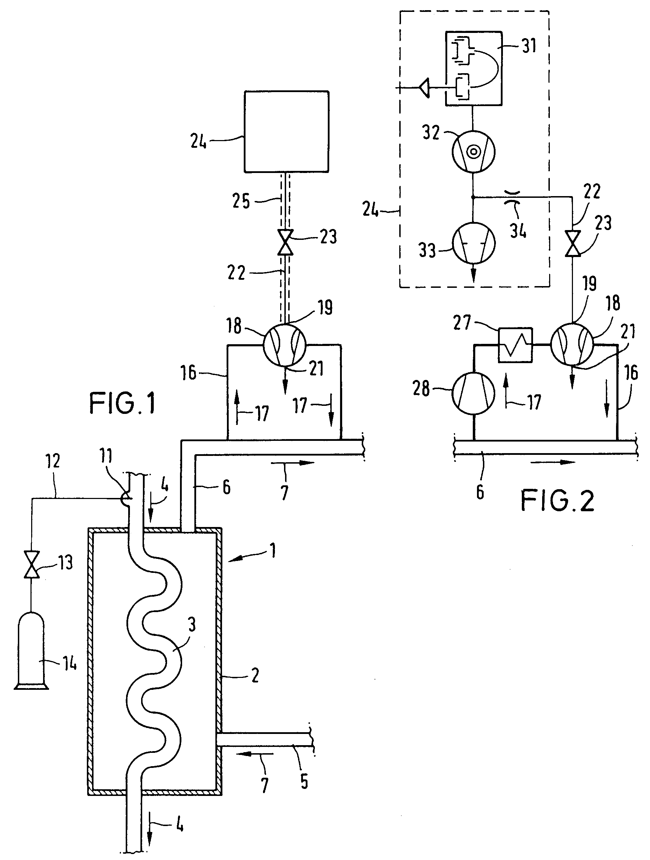

Figur 1 zeigt als eine der vielen Anwendungsmöglichkeiten des Gegenstandes der Erfindung einen Wärmetauscher 1 mit einem Gehäuse 2. Eine Rohrschlange 3 durchsetzt das Gehäuse 2 und ist Bestandteil eines Primärkreislaufs (Pfeile 4). An das Gehäuse 2 sind weiterhin die Leitungen 5 und 6 angeschlossen, die Bestandteile eines Sekundär- bzw. Kühlkreislaufs (Pfeile 7) sind.

Um die Rohrschlange 3 während des Betriebs des Wärmetauschers auf Lecks untersuchen und/oder überwachen zu können, mündet in den Primärkreislauf 4 ein Testgas-Dispergiersystem 11, das über die Leitung 12 (mit dem Ventil 13) mit einem Testgas-Vorrat 14 in Verbindung steht. Mit Hilfe dieser Einrichtung ist es möglich, die Flüssigkeit des Primärlaufs 4 mit Testgas anzureichern. Im Falle eines Lecks in den Wandungen der Rohrschlange 3 gelangt Testgas in die Prozeßflüssigkeit des Sekundärkreislaufs 7. Die Erfindung ermöglicht es, dieses in die Prozeßflüssigkeit des Sekundärkreislaufs 7 gelangende Testgas nachweisen zu können.

Beim in Figur 1 dargestellten Ausführungsbeispiel ist die Leitung 6, über die die Prozeßflüssigkeit das Gehäuse 2 des Wärmetauschers 1 verläßt, mit einem Bypass 16 ausgerüstet, der von einem Teil der Prozeßflüssigkeit durchströmt ist (Pfeile 17). Im Bypass 16 befindet sich eine Vakuumpumpe 18, beim Ausführungsbeispiel nach Figur 1 eine Flüssigkeitsstrahlvakuumpumpe, die unmittelbar mit der im Bypass 16 strömenden Prozeßflüssigkeit betrieben wird. Einlaß und Auslaß der Vakuumpumpe 18 sind mit 19 bzw. 21 bezeichnet. An den Einlaß 19 ist über die Leitung 22 mit dem Ventil 23 ein Testgasdetektor 24 angeschlossen.

Flüssigkeitstrahlvakuumpumpen - wie auch Flüssigkeitsringvakuumpumpen und Dampfstrahlvakuumpumpen - haben die Eigenschaft, daß im Einlaßbereich 19 dieser Pumpen ein unmittelbarer Kontakt zwischen ihrem Betriebsfluid und den von der Vakuumpumpe geförderten Gasen besteht. Leichte, in der Prozeßflüssigkeit gegebenenfalls vorhandene Testgase sind deshalb in der Lage, ungehindert aus der Prozeßflüssigkeit auszutreten und entgegen der Förderrichtung der Vakuumpumpe zu diffundieren. Bei offenem Ventil 23 gelangt das Testgas zum testgasempfindlichen Detektor 24 und wird dort nachgewiesen. Eine ständige Überwachung der Dichtheit der Rohrschlange 3 ist dadurch möglich.

Um unerwüschte Kondensationen in der Leitung 22 und im Detektor 24 zu verhindern, ist die Leitung 22 beheizt. Die Heizung 25 ist durch Strichelung angedeutet.

Beim Ausführungsbeispiel nach Figur 2 ist die Vakuumpumpe 18 als Dampfstrahlvakuumpumpe ausgerüstet. Dazu ist ihr im Bypass 16 der Verdampfer 27 vorgelagert. Zusätzlich ist im Bypass 16 eine Förderpumpe 28 für die Betriebsflüssigkeit vorgesehen. Diese ist erforderlich, wenn der Druckabfall der Prozeßflüssigkeit im Bereich des Anschlusses des Bypasses 16 an die Leitung 6 nicht ausreicht, um die Vakuumpumpe 18 betreiben zu können.

Beim Ausführungsbeispiel nach Figur 2 umfaßt der testgasempfindliche Detektor 24 ein auf die Masse des Testgases eingestelltes Massenspektrometer 31, eine Hochvakuumpumpe 32 sowie eine separate Vorvakuumpumpe 33. Die Hochvakuumpumpe 32 ist als Turbomolekularpumpe ausgebildet. Mit ihrer Vorvakuumseite ist die Leitung 22 verbunden. Gegebenenfalls durch die Leitung 22 hindurchtretendes Testgas gelangt entgegen der Förderrichtung der Turbomolekularvakuumpumpe 32 in das Massenspektrometer 31 und wird dort nachgewiesen.

Eine separate Vorvakuumpumpe 33 ist erforderlich, wenn die mit der Prozeßflüssigkeit betriebene Vakuumpumpe 18 nicht in der Lage ist, das für den Betrieb der Hochvakuumpumpe 32 erforderliche Vorvakuum zu erzeugen. In diesem Fall ist es darüber hinaus erforderlich, die Leitung 22 mit einer Drossel 34 auszurüsten, damit der für den Betrieb der Hochvakuumpumpe 32 erforderliche vorvakuumdruck aufrecht erhalten werden kann. Die separate Vorvakuumpumpe 33 kann entfallen, wenn mit Hilfe der Vakuumpumpe 18 die Aufrechterhaltung des für den Betrieb der Hochvakuumpumpe 32 erforderliche Vorvakuumdruckes sichergestellt werden kann. Auch bei dieser Lösung kann es zweckmäßig sein, die Leitung 22 mit einer Drossel (Drossel 34) auszurüsten.

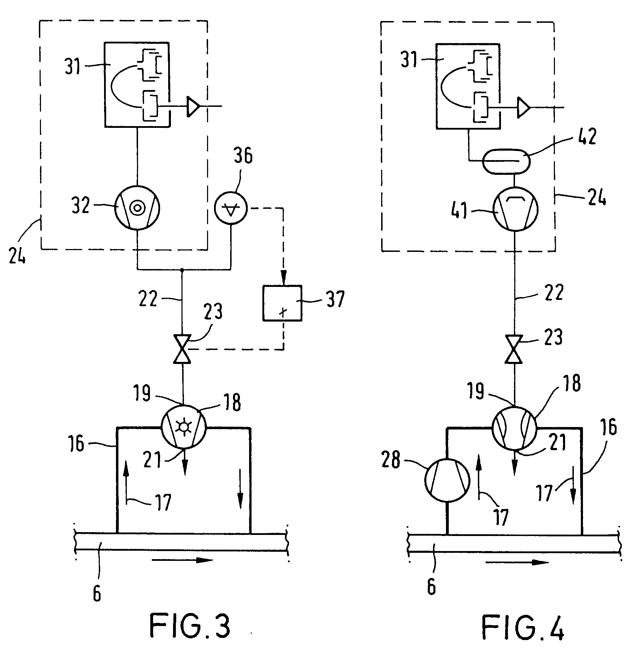

Beim Ausführungsbeispiel nach Figur 3 ist die Vakuumpumpe 18 eine Wasserringvakuumpumpe, die in der Lage ist, das für den Betrieb der Hochvakuumpumpe 32 erforderliche Vorvakuum zu erzeugen und aufrechtzuerhalten. Die Überwachung des Vorvakuums erfolgt mit Hilfe des an die Leitung 22 angeschlossenen Druckmeßgerätes 36. Zweckmäßig ist es, das Ventil 23 in Abhängigkeit vom gemessenen Druck zu steuern (Steuereinrichtung 37), und zwar derart, daß das Ventil beim Überschreiten des notwendigen Vorvakuumdruckes schließt. Die Inbetriebnahme der Einrichtung ist dadurch vereinfacht, nachteilige Folgen von Störfällen sind vermieden.

Beim Ausführungsbeispiel nach Figur 4 ist der Testgasdetektor 24 mit einer Diffusionspumpe 41 ausgerüstet. Zwischen Massenspektrometer 31 und Diffusionspumpe 41 befindet sich eine Kühlfalle 42, so daß Öldämpfe aus der Diffusionspumpe nicht in das Massenspektrometer 31 gelangen.

## Patentansprüche

1. Verfahren zum Nachweis eines leichten Testgases, vorzugsweise Helium, in einer Prozeßflüssigkeit mit Hilfe eines testgasempfindlichen Detektors (24), dadurch gekennzeichnet, daß mit der zu untersuchenden Prozeßflüssigkeit eine Vakuumpumpe (18) betrieben wird und daß der Testgasnachweis dadurch erfolgt, daß das im Bereich des Einlasses (19) der Vakuumpumpe (18) aus der Prozeßflüssigkeit austretende, entgegen der Förderrichtung der Vakuumpumpe (18)diffundierende Testgas dem Detektor (24) zugeführt wird.

2. Verfahren nach Anspruch 1, dadurch gekennzeichnet, daß die dem Betrieb der Vakuumpumpe (18) dienende Prozeßflüssigkeit zunächst verdampft wird und daß mit dem entstandenen Dampf eine Dampfstrahlvakuumpumpe (18) betrieben wird.

3. Vorrichtung zur Durchführung des Verfahrens zum Nachweis eines leichten Testgases, vorzugsweise Helium, in einer Prozeßflüssigkeit mit Hilfe eines testgasempfindlichen Detektors (24) nach Anspruch 1, dadurch gekennzeichnet, daß sie eine mit der zu untersuchenden Prozeßflüssigkeit betriebene Vakuumpumpe (18) aufweist.

4. Vorrichtung nach Anspruch 3, dadurch gekennzeichnet, daß die Vakuumpumpe (18) als Flüssigkeitsringvakuumpumpe ausgebildet ist.

5. Vorrichtung nach Anspruch 3, dadurch gekennzeichnet, daß die Vakuumpumpe (18) als Flüssigkeitsstrahl-Vakuumpumpe ausgebildet ist.

6. Vorrichtung zur Durchführung des Verfahrens zum Nachweises eines leichten Testgases, vorzugsweise Helium, in einer Prozeßflüssigkeit mit Hilfe eines testgasempfindlichen Detektors (24) nach Anspruch 2, dadurch gekennzeichnet, daß die mit Flüssigkeit betriebene Vakuumpumpe (18) eine Dampfstrahlvakuumpumpe ist, der in der Leitung (16) die die zu untersuchende Prozeßflüssigkeit führt, ein Verdampfer (27) vorgelagert ist.

7. Vorrichtung nach einem der Ansprüche 3 bis 6, dadurch gekennzeichnet, daß der Einlaß (19) der mit Flüssigkeit betriebenen Vakuumpumpe (18) mit einem testgasempindlichen Detektor (24) in Verbindung steht.

8. Verfahren nach Anspruch 1 oder 2, dadurch gekennzeichnet, daß die mit Flüssigkeit betriebene Vakuumpumpe (18) der Erzeugung eines Vorvakuums dient, das den Betrieb einer Hochvakuumpumpe (32) ermöglicht.

9. Vorrichtung nach Anspruch 7 und zur Durchführung des Verfahrens zum Nachweis eines leichten Testgases, vorzugsweise Helium, in einer Prozeßflüssigkeit mit Hilfe eines testgasempfindlichen Detektors (24) nach Anspruch 8, dadurch gekennzeichnet, daß der Testgasdetektor (24) ein auf die Masse des Testgases eingestelltes Massenspektrometer (31) und eine vom Testgas entgegen der Förderrichtung durchsetzte Hochvakuumpumpe (32, 41) aufweist.

10. Vorrichtung nach Anspruch 9, dadurch gekennzeichnet, daß die Hochvakuumpumpe (32) eine Molekularpumpe, eine Turbomolekularpumpe oder eine Diffusionspumpe ist.

11. Vorrichtung nach Anspruch 9, dadurch gekennzeichnet, daß die Hochvakuumpumpe (32) eine Compoundpumpe mit Turbomolekular- und Molekularpumpstufe ist.

12. Vorrichtung nach einem der vorhergehenden Vorrichtungsansprüche, dadurch gekennzeichnet, daß sich die Vakuumpumpe (18) in einem von einem Teil der Prozeßflüssigkeit durchströmten Bypass (16) befindet.

13. Vorrichtung nach Anspruch 12, dadurch gekennzeichnet, daß sich im Bypass (16) zusätzlich eine Förderpumpe (28) befindet.

14. Vorrichtung nach einem der vorhergehenden Vorrichtungsansprüche, dadurch gekennzeichnet, daß die die Vakuumpumpe (18) mit dem Testgasdetektor (24) verbindende Leitung (22) mit einem druckabhängig gesteuerten Ventil (37) ausgerüstet ist.

15. Vorrichtung nach einem der vorhergehenden Vorrichtungsansprüche, dadurch gekennzeichnet, daß die die Vakuumpumpe (18) mit dem Testgasdetektor (24) verbindende Leitung (22) zumindest abschnittswiese beheizt ist.

16. Vorrichtung nach einem der vorhergehenden Vorrichtungsansprüche, dadurch gekennzeichnet, daß die die Vakuumpumpe (18) mit dem Testgasdetektor (24) verbindende Leitung (22) mit einer Drossel (34) ausgerüstet ist.

17. Anwendung der Erfindung bei einem Wärmetauscher (1), dessen im Primärkreislauf (4) strömende Flüssigkeit mit Testgas angereichert ist und dessen im Sekundärkreislauf (7) strömende Flüssigkeit nach einem der Verfahren nach Anspruch 1, 2 oder 8 auf das Vorhandensein von Testgas überwacht wird.
